# EUROPEAN PATENT APPLICATION

(11) **EP 4 450 806 A1**
(43) Date of publication of application: **23.10.2024**
(21) Application number: 23169146.0
(22) Date of filing: 21.04.2023
(51) Int. Cl.: F03D 9/19, F03D 80/60, C25B 1/04

(54) **ELECTROCHEMICAL PRODUCTION SYSTEM, PLATFORM SYSTEM AND WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The present invention relates to an electrochemical production system (1) for a platform system (2) of a wind turbine (3), comprising an electrochemical production unit (4) for converting electricity and a first chemical product into a second chemical product, a housing (5) for protecting the electrochemical production unit (4) from environmental influences and a cooling system (6) for cooling the electrochemical production unit (4), wherein the cooling system (6) comprises an air cooling radiator (7) and a holding device (8) for holding the air cooling radiator (7) above the housing (5). The invention further relates to a platform system (2) for a wind turbine (3) and a wind turbine (3).

## Description

The present invention relates to an electrochemical production system for a platform system of a wind turbine. The invention also relates to platform system for a wind turbine with a respective electrochemical production system and a wind turbine with a respective platform system.

Wind energy is a regenerative and, however, volatile energy source. Wind turbines for converting wind energy into electrical energy need a wind speed above a certain minimum for providing enough power for rotating a rotor and operating a generator of the wind turbine. For wind speeds above a predefined threshold, operation of the wind turbine must be suspended in order to avoid damages to the wind turbine due to critical loads.

Moreover, in periods of relatively strong winds, it might be indicated that the power generated by the wind turbine has to be reduced in order to avoid peaks in the power frequency of the power grid that the wind turbine is feeding to. In other words, the wind turbine is deliberately forced to generate less electrical power than it potentially could produce at the present wind speed.

Beyond that, in no wind phases, it may be necessary that electric energy has to be obtained from the power grid to avoid longer standstill periods of the rotor and damages to rotor bearings. Since availability of electric energy in no wind phases is usually relatively low, the drain of additional electric energy from the power grid is disadvantageous.

Due to these setbacks, there is a growing demand for increasing the overall efficiency of the wind turbine by storing at least a part of the energy produced by the wind turbine in an energy storage system. For this purpose, different energy storage systems have been applied, such as electrical energy storage systems, mechanical energy storage systems or chemical energy storage systems.

Chemical energy storage systems are also denoted as "power to X" system, wherein "X" is a variable for a chemical product, such as H₂, NH₃ or the like, which is produced by means of electric energy and one or more other chemical products, such as H₂O, CO₂, N₂ or the like. The produced chemical product can be, e.g., stored in a tank or transferred through a pipeline and can be used for producing electrical energy at a later time, e.g., when the availability of regenerative electrical energy is lower than the demand.

According to present solutions, electric energy produced by offshore wind farms is transferred to a land-based chemical energy storage system for being converted into a chemical product. This has the disadvantage that a lot of space has to be provided at the land site for the chemical energy storage system and necessary cooling systems. Moreover, especially at peak production levels of regenerative electrical energy, the power lines from the offshore wind farm to the power grid are heavily used and need to be designed accordingly. Both setbacks cause additional costs.

It is therefore the object of the present invention to eliminate or at least partially eliminate the disadvantages described above in the case of an electrochemical production system for a platform system of a wind turbine. In particular, it is the object of the present invention to create an electrochemical production system for a platform system of a wind turbine, a platform system for a wind turbine and a wind turbine, which avoids the waste of space for an electrochemical production system and/or facilitate a lighter power line design in a simple and inexpensive manner.

The above object is achieved by the claims. Accordingly, the problem is solved by an electrochemical production system for a platform system of a wind turbine with the features of the independent claim 1, by a platform system for a wind turbine with the features of the subordinate claim 14 and by a wind turbine with the features of the subordinate claim 15. Further features and details of the invention emerge from the subclaims, the description and the drawings. Features and details that are described in connection with the electrochemical production system according to the invention naturally also apply in connection with the platform system according to the invention as well as the wind turbine and vice versa, so that with regard to the disclosure of the individual aspects of the invention, reference is or can always be made to each other.

According to a first aspect of the invention, the object is achieved by an electrochemical production system for a platform system of a wind turbine. The electrochemical production system comprises an electrochemical production unit for converting electricity and a first chemical product into a second chemical product, a housing for protecting the electrochemical production unit from environmental influences and a cooling system for cooling the electrochemical production unit, wherein the cooling system comprises an air cooling radiator and a holding device for holding the air cooling radiator above the housing.

The electrochemical production unit of the electrochemical production system is configured for converting electricity generated by the wind turbine, especially an offshore wind turbine, by using a first chemical product, such as water, carbon dioxide, nitrogen or the like, into a second chemical product, such as hydrogen, ammonia or the like. The electrochemical production unit can be configured for producing one or more intermediate chemical products before the second chemical product is obtained. Preferably, the electrochemical production unit comprises an electrical interface, such as electrical wires, an electrical plug or the like, for being electrically coupled to a power system of the wind turbine. Thus, the electricity for the conversion process of the electrochemical production unit can be obtained from the wind turbine, especially a generator of the wind turbine.

The housing is configured for protecting the electrochemical production unit from environmental influences, such as wind, rain, dust, salt water or the like. The housing can comprise metal, especially stainless, coated or the like. Preferably, the housing is box-shaped, like a freight container, wherein the dimensions of the housing can differ from a standard 20 ft. or 40 ft. container. Preferably, the housing has one or more cooling openings, such as cooling slots or the like. The housing is configured to stand on top of a base platform of the platform system.

It is preferred that the cooling openings are facing to a top side of the housing for being aligned with the air cooling radiator of the cooling system. According to an alternative embodiment, the cooling openings can face to a side of the housing for being aligned with the air cooling radiator. Preferably, the housing comprises a cooling opening for each air cooling radiator or one or more larger cooling openings, each configured for being aligned with a plurality of air cooling radiators, especially such that all air cooling radiators are aligned with a cooling opening.

The cooling system is configured for cooling the electrochemical production unit. For this purpose, the cooling system comprises the air cooling radiator. Preferably, the cooling system comprises a plurality of air cooling radiators. It is preferred that the air cooling radiators are arranged side by side in one, two or three rows. Within the patent application, an air cooling radiator can be a combination of a radiator for providing cold and a fan for providing air movement through the radiator for heat exchange, namely cooling the air, e.g., hot air from the electrochemical production unit, by the radiator.

For arranging the air cooling radiators in a position above the housing, the cooling system comprises the holding device. The position above the housing can be a normal working position of the cooling system for cooling the electrochemical production unit. Alternatively, the position above the housing can be a maintenance position, wherein the working position of the cooling system is at a side of the housing. A position above the housing is preferably a position vertically above the housing. Alternatively, especially when the position above the housing is a maintenance position, the position above the housing can be a position with a vertical component, which is above the top of the housing, and a horizontal component, providing an offset from the top of the housing, e.g., from a center of the top or beside the top.

The holding device can be configured as a frame, half frame, portal or the like. Preferably, the holding device comprises a holding section for holding the one or more air cooling radiators and a standing section for providing a secure stand of the holding device, especially with the one or more air cooling radiators mounted onto. Preferably, the standing section is configured for leaning on the housing. It is preferred that the standing section is configured to stand on top of the housing or on top of the base platform of the platform system. Alternatively or additionally, the standing section can be configured for being mounted to a side of the housing. It is preferred that the holding section is eccentric to the standing section. This means, e.g., that the holding section protrudes away from the standing section. Thus, the standing section can be arranged at a side of the housing, while the holding section is arranged above the housing.

An electrochemical production system according to the invention has the advantage over conventional electrochemical production systems that in a simple and inexpensive way, the chemical conversion process is brought to a platform of the wind turbine. Thus, the electricity produced by the wind turbine can be directly used for the chemical product conversion process, e.g., for producing hydrogen, ammonia or the like. The size of power lines for connecting the wind turbine to the power grid can be reduced. Furthermore, electrical losses due to transport are reduced. By holding the air cooling radiator above the housing, no deck space of the base platform is occupied by the cooling system. This provides a better access to the housings, e.g., for maintenance worker.

According to a preferred further development of the invention, an electrochemical production system can provide that the holding device is configured for being attached to the housing. Preferably, the standing section of the holding device is configured for being attached to the housing, e.g., by bolts, nuts, welding or the like. This has the advantage that in a simple and inexpensive way, a secure arrangement of the cooling system at the housing is provided. Thus, a predetermined relative position of the air cooling radiators to the electrochemical production unit can be guaranteed.

Preferably, the holding device is configured for being attached to a base platform of the platform system. Preferably, the standing section of the holding device is configured for being attached to the base platform, e.g., by bolts, nuts, welding or the like. The base platform is configured for providing a stand for the housing of the electrochemical production unit. This has the advantage that in a simple and inexpensive way, a secure arrangement of the cooling system at the housing is provided. Thus, a predetermined relative position of the air cooling radiators to the electrochemical production unit can be guaranteed.

It is preferred, according to the invention, that the holding device is configured for holding the air cooling radiator spaced-apart from the housing. A preferred minimum distance between the air cooling radiator and the housing is 10 cm. A preferred maximum distance between the air cooling radiator and the housing is 100 cm. A preferred distance between the air cooling radiator and the housing is about 40 cm - 50 cm. The distance can be between the top of the housing to the air cooling radiator, located above the top of the housing. Furthermore, the distance can be between a sidewall of the housing to the air cooling radiator, located at a side of the side wall of the housing. This has the advantage that in a simple and inexpensive way, a cooling action of the air cooling radiator for cooling the electrochemical production unit can be improved.

More preferred, the holding device comprises a first holding unit for providing a stand of the cooling system at the housing and a second holding unit for holding the air cooling radiator in a relative position to the housing, wherein the second holding unit is attached to the first holding unit. Preferably, the first holding unit provides for the standing section of the holding device. It is further preferred that the second holding unit provides for the holding section of the holding device. The first holding unit and the second holding unit are designed as separate units, interconnected by connection means, e.g., nuts, bolts or the like. This has the advantage that in a simple and inexpensive way, the holding device is provided.

In a particularly preferred embodiment, the second holding unit is moveably attached to the first holding unit. For such relative movement, various mechanical devices or a combination of mechanical devices can be used, e.g., a hinge, a bearing, a rail system or the like. The mutual attachment is preferably such that a rotation of the second holding unit relatively to the first holding unit is provided, preferably for 90 degrees. It is preferred that the air cooling radiator can be moved from a straight vertical position to a straight horizontal position. With such holding device, the air cooling radiator can be arranged in the vertical position at a side of the housing for normal cooling operation and in the horizontal position above the housing for giving space at the side of the housing and, by these means, improving maintenance work at the housing and the electrochemical production unit. Thus, the usage of the available space at the platform is improved. Furthermore, the mutual attachment is preferably such that a horizontal movement of the second holding unit relatively to the first holding unit is provided. This horizontal movement can be such that with one cooling system, two or more electrical production units can be cooled. This has the advantage that in a simple and inexpensive way, the efficiency of the electrochemical production system can be further improved.

It is preferred that the electrochemical production system comprises an actuator for automatically moving the second holding unit between at least two relative positions to the first holding unit. Preferably, the actuator is configured for moving the second holding unit between a first relative position of 0° and a second relative position of 90°. For providing the moving action, the actuator can comprise an electric engine, a hydraulic piston, a gearbox or the like. This has the advantage that in a simple and inexpensive way, the efficiency of the electrochemical production system can be further improved.

According to a preferred embodiment of the invention, the first holding unit and the second holding unit are configured such that in a first relative position of the second holding unit to the first holding unit of 0 degrees, an overall height of the cooling system is larger than in a second relative position of the second holding unit to the first holding unit of 90 degrees. This configuration has the advantage that in the vertical position, a collision with the wind turbine blades is avoided due to a reduced overall height of the electrochemical production system. This has the advantage that in a simple and inexpensive way and due to the reduced height of the electrochemical production system in the vertical cooling position, the distance between the rotor blades and the base platform can be reduced, e.g., by reducing the height of the tower.

It is preferred that the first holding unit and the second holding unit are configured such that, in the first relative position of the second holding unit to the first holding unit, the air cooling radiators are positioned straight above a top the housing. This has the advantage that in a simple and inexpensive way, an available space on the base platform is increased for providing better maintenance.

Further preferred, the first holding unit and the second holding unit are configured such that, in a second relative position of the second holding unit to the first holding unit, the air cooling radiators are positioned at a side of the housing. In that second position, a rotational axis of the air-cooling radiators is preferably oriented horizontally, preferred straight away from the housing. This has the advantage that in a simple and inexpensive way, a cooling action for the electrochemical production unit can be improved.

Preferably, the cooling system comprises at least two air cooling radiators, wherein the second holding unit comprises at least two second holding sub-units, each holding at least one of the at least two air cooling radiators. By these means, the replacement and maintenance of the air cooling units can be improved. Furthermore, the second holding sub-unit can be replaced separately. This has the advantage that in a simple and inexpensive way, the flexibility of the electrochemical production system is further improved.

It is preferred that the at least two second holding sub-units are configured for being moved independently from each other relatively to the first holding unit. In other words, one sub-unit can be in a position for cooling the electrochemical production unit and at the same time, the other sub-unit can be in a different position, e.g., for enabling or improving maintenance work. This has the advantage that in a simple and inexpensive way, the flexibility of the electrochemical production system is further improved.

Particularly preferred, the cooling system comprises four, six, eight or ten air cooling radiators, wherein the air cooling radiators are attached to the holding device. Preferably, the air cooling radiators are arranged in two rows, preferably with the same amount of air cooling radiators per row. This has the advantage that in a simple and inexpensive way, a reliable cooling action of the electrochemical production unit can be provided, even when one or two air cooling radiators are damaged or temporarily removed, e.g., for maintenance reasons.

According to a second aspect of the invention, the object is achieved by a platform system for a wind turbine. The platform system comprises a base platform for being attached to a tower of the wind turbine. According to the invention, at least one electrochemical production system according to the first aspect of the invention is provided at a top side of the base platform. Preferably, a plurality of these electrochemical production systems is provided at a top side of the base platform. The arrangement of the electrochemical production systems is preferably such that, with the air cooling radiators in the horizontal position, there is enough space for a maintenance worker for walking on the base platform between adjacent electrochemical production systems. Moreover, the arrangement of the electrochemical production systems is preferably such that, with the air cooling radiators in the vertical position, there is not enough space for a maintenance worker for walking on the base platform between adjacent electrochemical production systems.

The platform system according to the invention has all the advantages that have already been described for an electrochemical production system according to the first aspect of the invention. Accordingly, the platform system according to the invention has the advantage over conventional electrochemical production systems that in a simple and inexpensive way, the chemical conversion process is brought to a platform of the wind turbine. Thus, the electricity produced by the wind turbine can be directly used for the chemical product conversion process, e.g., for producing hydrogen, ammonia or the like. The size of power lines for connecting the wind turbine to the power grid can be reduced. Furthermore, electrical losses due to transport are reduced. By holding the air cooling radiator above the housing, no deck space of the base platform is occupied by the cooling system. This provides a better access to the housings, e.g., for maintenance workers.

According to a third aspect of the invention, the object is achieved by a wind turbine. Preferably, the wind turbine is configured as an offshore wind turbine. The wind turbine comprises a tower, a foundation, a nacelle, a rotor, a generator, a plurality of wind turbine blades, preferably three wind turbine blades. According to the invention, a platform system according to the second aspect of the invention is attached to the tower at an intermediate section of the tower between the foundation and the nacelle.

The wind turbine according to the invention has all the advantages that have already been described for an electrochemical production system according to the first aspect of the invention and for a platform system according to the second aspect of the invention. Accordingly, the wind turbine according to the invention has the advantage over conventional wind turbines, that in a simple and inexpensive way, the chemical conversion process is brought to a platform of the wind turbine. Thus, the electricity produced by the wind turbine can be directly used for the chemical product conversion process, e.g., for producing hydrogen, ammonia or the like. The size of power lines for connecting the wind turbine to the power grid can be reduced. Furthermore, electrical losses due to transport are reduced. By holding the air cooling radiator above the housing, no deck space of the base platform is occupied by the cooling system. This provides a better access to the housings, e.g., for maintenance workers.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic perspective view of a wind turbine according to a preferred embodiment of the invention,
Figure 2 shows a schematic perspective view of a platform system according to a preferred first embodiment of the invention,
Figure 3 shows a schematic perspective view of a platform system according to a preferred second embodiment of the invention in a first configuration,
Figure 4 shows a schematic perspective view of the platform system of figure 3 in an intermediate configuration,
Figure 5 shows a schematic perspective view of the platform system of figure 3 in a second configuration, and
Figure 6 shows a schematic side view a wind turbine according to a preferred embodiment of the invention in a maintenance position.

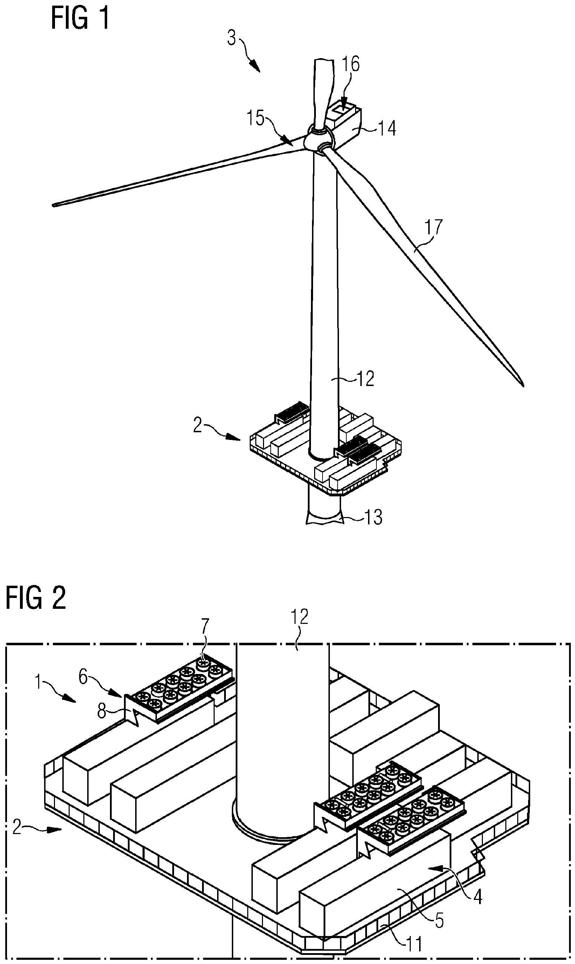

Elements with the same function and effectiveness are denoted each in figs. 1 - 6 with the same reference numbers.

In fig. 1, a wind turbine 3 according to a preferred embodiment of the invention is shown in a schematic perspective view. The wind turbine 3 comprises a tower 12, extending from a foundation 13. On the top of the tower 12, a nacelle 14 is mounted. The nacelle 14 houses a generator 16. A rotor 15 with three wind turbine blades 17 is arranged at the nacelle 14. In an intermediate section of the tower 12 between the foundation 13 and the nacelle 14, a platform system 2 according to the invention is mounted such that during rotation of the rotor 15, a collision between the wind turbine blades 17 and the platform system 2 is avoided.

Fig. 2 shows a platform system 2 according to a preferred first embodiment of the invention in a schematic perspective view. On a base platform 11 of the platform system 2, a plurality of electrochemical production systems 1 is arranged. Each electrochemical production system 1 comprises an electrochemical production unit 4 and a housing 5, wherein the electrochemical production unit 4 is located within the housing 5. Each electrochemical production system 1 comprises a cooling system 6 with a plurality of air cooling radiators 7, mounted to a holding device 8 in a way that the air cooling radiators 7 are arranged above a top of the housing 5 for cooling the respective electrochemical production unit 4. The holding device 8 is mounted onto the housing. The holding device 8 is configured for holding the air cooling radiators 7 in that position, only. Therefore, the air cooling radiators 7 always face upwards. This embodiment provides for a particularly efficient cooling action for the electrochemical production units 4.

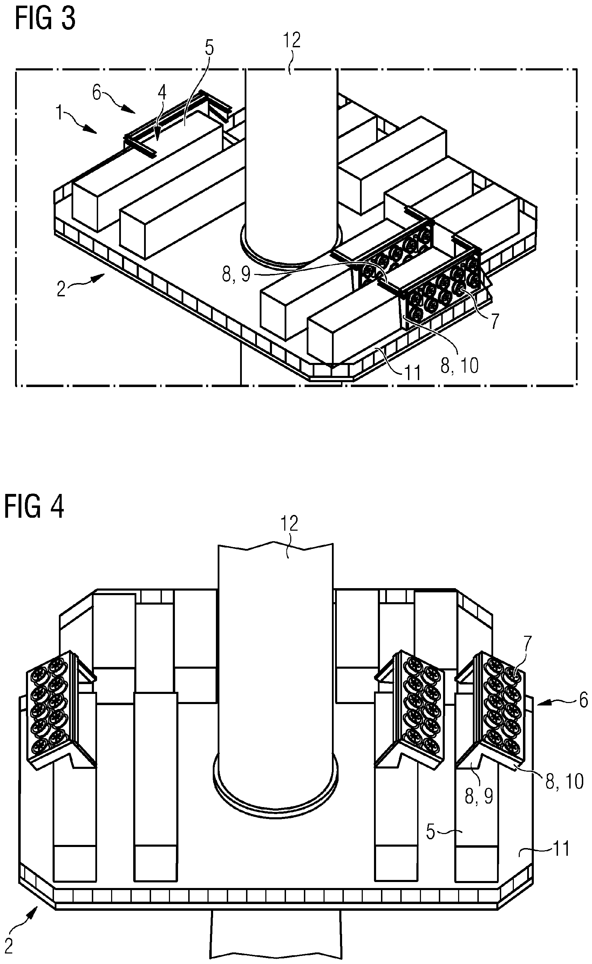

In fig. 3, a platform system 2 according to a preferred second embodiment of the invention is shown in a first configuration in a schematic perspective view. The platform system 2 according to the preferred second embodiment of the invention differs from the platform system 2 according to the preferred first embodiment of the invention in the design of the holding device 8 and a working position of the air cooling radiators 7. The holding device 8 comprises a first holding unit 9 for fixing the holding device 8 to the housing and a second holding unit 10 for holding the air cooling radiators 7. The second holding unit 10 is hinged to the first holding unit 9. In this first configuration, the air cooling radiators 7 are arranged at a side of the housing 5, facing sideways. In the illustrated first configuration, the cooling system 6 is in a working position for cooling the electrochemical production units 4. In that position, a height of the electrochemical production system 1 has a minimum. Therefore, collision with the wind turbine blades 17 is avoided. However, walking paths on the base platform 11 are blocked by the cooling system 6.

Fig. 4 shows the platform system 2 of fig. 3 in an intermediate configuration in a schematic perspective view. In the intermediate configuration, the second holding device 10 has been rotated from the first configuration towards the top side of the housing 5. The air cooling radiators 7 are arranged at an angle to the top of the housing 5.

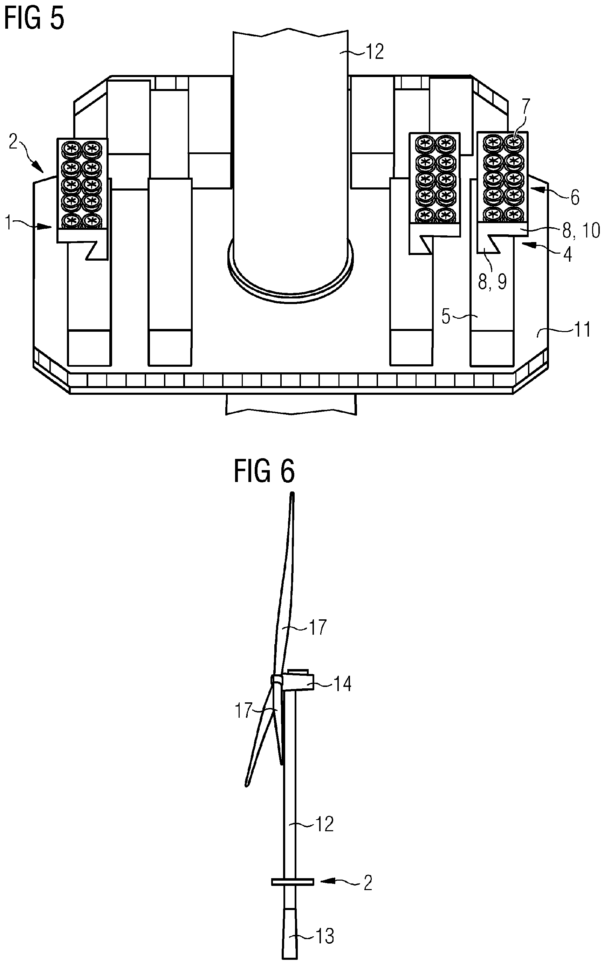

In fig. 5, the platform system 2 of fig. 3 is shown in a second configuration in a schematic perspective view. In the second configuration, the second holding device 10 has been rotated from the intermediate configuration towards the top side of the housing 5 in a way that the air cooling radiators 7 are arranged straight above the top of the housing 5. In that position, a height of the electrochemical production system 1 has a maximum. Therefore, to avoid a collision with the wind turbine blades 17, the wind turbine blades 17 have to be arranged in a neutral position, in which one wind turbine blade 17 is facing straight upwards. Consequently, power production of the wind turbine 3 is stopped. In the second configuration, walking paths on the base platform 11 are free for maintenance worker.

Fig. 6 shows a wind turbine 3 according to a preferred embodiment of the invention in a maintenance position in a schematic side view. In the maintenance position, one wind turbine blade 17 is facing straight upwards. Thus, the other wind turbine blades 17 have an equal distance to the platform system 2. The platform system 2 is configured according to the preferred second embodiment of the invention. For maintenance, the platform system 2 is in the second configuration as also shown in fig. 5.

## Claims

1. Electrochemical production system (1) for a platform system (2) of a wind turbine (3), comprising an electrochemical production unit (4) for converting electricity and a first chemical product into a second chemical product, a housing (5) for protecting the electrochemical production unit (4) from environmental influences and a cooling system (6) for cooling the electrochemical production unit (4), wherein the cooling system (6) comprises an air cooling radiator (7) and a holding device (8) for holding the air cooling radiator (7) above the housing (5).

2. Electrochemical production system (1) according to claim 1,
**characterized in**
**that** the holding device (8) is configured for being attached to the housing (5).

3. Electrochemical production system (1) according to claim 1 or 2,
**characterized in**
**that** the holding device (8) is configured for being attached to a base platform (11) of the platform system (2).

4. Electrochemical production system (1) according to any of the previous claims,
**characterized in**
**that** the holding device (8) is configured for holding the air cooling radiator (7) spaced-apart from the housing (5).

5. Electrochemical production system (1) according to any of the previous claims,
**characterized in**
**that** the holding device (8) comprises a first holding unit (9) for providing a stand of the cooling system (6) at the housing (5) and a second holding unit (10) for holding the air cooling radiator (7) in a relative position to the housing (5), wherein the second holding unit (10) is attached to the first holding unit (9).

6. Electrochemical production system (1) according to claim 5,
**characterized in**
**that** the second holding unit (10) is moveably attached to the first holding unit (9).

7. Electrochemical production system (1) according to claim 6,
**characterized in**
**that** the electrochemical production system (1) comprises an actuator for automatically moving the second holding unit (10) between at least two relative positions to the first holding unit (9).

8. Electrochemical production system (1) according to claim 6 or 7,
**characterized in**
**that** the first holding unit (9) and the second holding unit (10) are configured such that in a first relative position of the second holding unit (10) to the first holding unit (9) of 0 degrees, an overall height of the cooling system (6) is larger than in a second relative position of the second holding unit (10) to the first holding unit (9) of 90 degrees.

9. Electrochemical production system (1) according to claim 8,
**characterized in**
**that** the first holding unit (9) and the second holding unit (10) are configured such that, in the first relative position of the second holding unit (10) to the first holding unit (9), the air cooling radiators (7) are positioned straight above a top the housing (5).

10. Electrochemical production system (1) according to claim 8 or 9,
**characterized in**
**that** the first holding unit (9) and the second holding unit (10) are configured such that, in a second relative position of the second holding unit (10) to the first holding unit (9), the air cooling radiators (7) are positioned at a side of the housing (5).

11. Electrochemical production system (1) according to any of claims 4 - 10,
**characterized in**
**that** the cooling system (6) comprises at least two air cooling radiators (7), wherein the second holding unit (10) comprises at least two second holding sub-units, each holding at least one of the at least two air cooling radiators (7).

12. Electrochemical production system (1) according to claim 11,
**characterized in**
**that** the at least two second holding sub-units are configured for being moved independently from each other relatively to the first holding unit (9).

13. Electrochemical production system (1) according to any of the previous claims,
**characterized in**
**that** the cooling system (6) comprises four, six, eight or ten air cooling radiators (7), wherein the air cooling radiators (7) are attached to the holding device (8).

14. Platform system (2) for a wind turbine (3), comprising a base platform (11) for being attached to a tower (12) of the wind turbine (3),
**characterized in**
**that** at least one electrochemical production system (1) according to any of the previous claims is provided at a top side of the base platform (11).

15. Wind turbine (3), comprising a tower (12), a foundation (13), a nacelle (14), a rotor (15), a generator (16) and a plurality of wind turbine blades (17),
**characterized in**
**that** a platform system (2) according to claim 14 is attached to the tower (12) at an intermediate section of the tower (12) between the foundation (13) and the nacelle (14).
